# EUROPÄISCHE PATENTSCHRIFT

(11) **EP 2 547 925 B1**
(45) Veröffentlichungstag und Bekanntmachung des Hinweises auf die Patenterteilung: **04.03.2015**
(21) Anmeldenummer: 11710468.7
(22) Anmeldetag: 21.03.2011
(51) Int. Cl.: F16C 33/10, F16C 9/00

(54) **GLEITLAGERSCHALE**
SLIDING BEARING SHELL
COQUILLE DE COUSSINET LISSE

(30) Priorität: 19.03.2010 DE 102010003077
(43) Veröffentlichungstag der Anmeldung: 23.01.2013
(73) Patentinhaber: Federal-Mogul Wiesbaden GmbH, 65201 Wiesbaden (DE)
(72) Erfinder: GARNIER, Thierry, 55278 Köngernheim (DE)
(74) Vertreter: Mehler Achler
(86) Internationale Anmeldenummer: PCT/EP2011/054194
(87) Internationale Veröffentlichungsnummer: WO 2011/113952

(56) Entgegenhaltungen:
- DE-A1- 2 537 046
- DE-A1-102007 058 744
- JP-A- 3 048 017

## Beschreibung

Die Erfindung betrifft eine halbringförmige Gleitlagerschale mit zwei umfänglichen Endabschnitten, einer radialen Innenseite, entlang der eine Gleitfläche angeordnet ist, und mit auf der Innenseite im Bereich wenigstens eines der Endabschnitte ausgebildeten, in Umfangsrichtung verlaufenden und in axialer Richtung getrennten Rillen.

Typische Anwendungen der gattungsgemäßen Gleitlagerschale sind das Pleuellager oder das Kurbelwellenhauptlager in Verbrennungsmotoren. Gleitlagerschalen der gattungsgemäßen Art sind beispielsweise aus der deutschen Patentanmeldung DE 10 2005 037 502 oder der DE 101 63 292 A1 bekannt.

Beide Schriften befassen sich mit zwei einander entgegenstehenden Problemstellungen:

Ein Lager wird aus zwei solchen Gleitlagerschalen gebildet, die mit ihren Teilflächen, das sind die in Umfangsrichtung stirnseitigen Endflächen, aufeinanderliegen. Bei geringfügigen Ungenauigkeiten des zusammengebauten Lagers liegen die Teilflächen nicht exakt aufeinander mit der Folge, dass die Innenkante der Teilfläche der einen Lagerschale radial nach innen gegenüber der Innenkante der benachbarten Teilfläche der anderen Lagerschale vorsteht. Durch diesen Versatz kann die hydrodynamische Ölschmierung behindert werden, was zu einem zusätzlichen Verschleiß an dem Lager führen kann. Um dies zu verhindern, besitzen die Lagerschalen bekanntermaßen eine so genannte Freilegung auf der Innenseite ihrer umfänglichen Endabschnitte, wo die Dicke der Gleitlagerschale von der Seite der Gleitschicht über die gesamte axiale Länge reduziert ist. Solche Freilegungen haben jedoch prinzipiell den Nachteil, dass einerseits der hydrodynamische Öldruck an dieser Stelle zusammenbricht und, schlimmer noch, dass Schmieröl in axialer Richtung aus der Lagerschale an dieser Stelle austreten kann, was eine erhöhte Ölförderleistung erforderlich macht.

Um diesem Problem zu entgegnen, sind gemäß der DE 101 63 292 A1 in dem Bereich, in dem üblicherweise die Freilegung eingebracht wird, Ölnuten vorgesehen, die parallel und unmittelbar nebeneinander angeordnet sind. Diese Nuten werden durch Bohren hergestellt, wobei eine spiralförmige Rille mit einem Rillenabstand entsprechend dem Vorschub des Bohrwerkzeugs entsteht und zwischen den Rillen umlaufende Stege verbleiben. Beim Einlaufen der Lagerschale werden diese Stege verschleißbedingt abgetragen, so dass sich die Freilegung durch den Anfangsverschleiß gewissermaßen selbst bildet, und zwar in genau dem Ausmaße, das im Betriebszustand benötigt wird.

Auch in den übrigen Gleitflächenbereichen der Lagerschale sind Ölnuten vorgesehen, die jedoch eine geringere Tiefe und somit gegen Verschleiß widerstandsfähigere, stumpfwinkligere Stege aufweisen. Die unterschiedlich ausgestalteten Ölnuten werden durch Bohren der Lagerschale erzeugt, erfordern jedoch unterschiedliche Werkzeuge und mehrere Bohrprozesse, was den Fertigungsaufwand erhöht.

In der DE 10 2005 037 02 wird vorgeschlagen, Ölnuten in den Freilegungsbereichen anzuordnen, die in Strömungsrichtung des Schmieröls zur Mittellinie der Lagerschale hin geneigt ausgerichtet sind. Dadurch, dass die Nuten in Strömungsrichtung des Schmieröls, die durch die Drehrichtung der Welle vorgegeben ist, auf die Mittellinie hin zulaufen, wird das ÖI vom Randbereich der Freilegung nach innen geführt und auf diese Weise einem axialen Ölabfluss in den Freilegungsbereichen entgegengewirkt.

Vor diesem Hintergrund ist es Aufgabe der vorliegenden Erfindung wie die Freilegung einem montagebedingten Versatz zweier Lagerschalen entgegenzuwirken und gleichzeitig eine verbesserte Abdichtung der Lagerschale gegen axialen Ölabfluss zu erzielen.

Die Aufgabe wird durch eine Lagerschale mit den Merkmalen des Patentanspruchs 1 gelöst. Bei einer Gleitlagerschale der eingangs genannten Art laufen die Rillen erfindungsgemäß am umfänglichen Ende der Gleitlagerschale beginnend in Umfangsrichtung einwärts mit abnehmender Breite und mit abnehmender Tiefe aus, wobei jeweils eine Rille in axialer Richtung auf beiden Seiten außen liegend angeordnet ist und die jeweilige Kante an dem axialen Ende der Gleitfläche anschneidet.

Die Erfindung sieht demnach keine klassischen Freilegungen vor, sondern einzelne Rillen in den umfänglichen Endabschnitten auf der Innenseite, zwischen denen die Gleitfläche in Umfangsrichtung bis zur Teilfläche erhaben stehen bleibt. Um die in Umfangsrichtung einwärts abnehmende Breite der Rillen nehmen die erhabenen Abschnitte der Gleitfläche (im Folgenden auch Stege genannt) an Breite zu. Die Stege leisten einem Verschleiß in Umfangsrichtung einwärts gesehen deshalb einen zunehmenden Widerstand, so dass der insbesondere beim Einlaufen der Gleitlagerschale gewünschte Verschleiß nur nahe der Teilflächen und jedenfalls nur so weit erfolgt, wie er zur Kompensation eines etwaigen Versatzes zweier Gleitlagerschalen benötigt wird. Die verbleibenden Stege dienen im Folgenden zur Abdichtung und vermindern effizient einen axialen Ölausfluss.

Im Unterschied zu den aus der DE 101 63 292 A1 bekannten Lagern laufen die Rillen in Umfangsrichtung aus. Das Lager bleibt also ein Glattlager, dessen Tragflächenanteil der Innenseite nur in den Freilegungsbereichen kontinuierlich abnimmt.

Gleitlagerschalen mit Rillen, die am umfänglichen Ende der Gleitlagerschale beginnend in Umfangsrichtung einwärts mit abnehmender Breite B und mit abnehmender Tiefe T auslaufen, sind beispielsweise auch aus der Schrift JP 03-048017 AA oder der DE 25 37 046 A1 bekannt. Zweck der dort angegebenen Rillen ist die Sicherstellung einer Ölzirkulation von einer Gleitlagerschale zur anderen eines ein Radiallager bildenden Gleitlagerschalenpaares. Die dort gezeigten Rillen sind allerdings nicht geeignet, im Sinne der vorstehenden Beschreibung die Freilegungen zu ersetzen. Dies liegt vor allem daran, dass keine Rille in axialer Richtung außenliegend angeordnet ist. Es ist bekannt, dass bei hohen Lasten so genannte Kantenträger, also Berührungen oder Spitzenlasten zwischen dem Gleitlager und der Welle, insbesondere im Freilegungsbereich durch Verformung des die Lagerschale aufnehmenden Teils, z. B. Pleuel oder Kurbelwellengehäuse, oder durch Schiefstellung der Welle auftreten können. Aufgrund hoher Beschleunigung wird beispielsweise das Pleuelauge radial eingeschnürt, und zwar typischerweise in der Nähe der Teilflächen der zusammengefügten Lagerschalen befinden. Die erfindungsgemäße Gleitlagerschale mit den auf beiden Seiten außenliegenden Rillen wirkt den Kantenträgern speziell im Bereich der größten Verformung oder Schiefstellung entgegen.

Zum anderen weisen im Fall JP 03-048017 AA die Rillen so große Abstände auf, dass die dazwischen stehenbleibenden erhabenen Stege zu massiv sind, um beim Einlaufen der Gleitlagerschale in ausreichendem Maße zu verschleißen.

Ein weiterer Unterschied besteht darin, dass die Rillen eine Makrostruktur mit wesentlich größerer Rillenbreite und Rillentiefe bilden. Bevorzugt beträgt die maximale Tiefe der Rillen am umfänglichen Ende der Gleitlagerschale, also an der Teilfläche, von 0,5 % bis 5 %, bevorzugt von 0,5 % bis 2 % der Lagerschalendicke.

Bevorzugt beträgt die maximale Breite der Rillen am umfänglichen Ende der Gleitlagerschale, also an der Teilfläche, von 5 % bis 50 %, bevorzugt von 10 % bis 25 % der Lagerschalenbreite.

Durch den in Umfangsrichtung von dem Endbereich zum Scheitelpunkt der Lagerschale hin abnehmenden Querschnitt der Rillen wird ein progressiver Öldruckaufbau in Umfangsrichtung erzielt. Dies stellt eine erhebliche Verbesserung gegenüber den bekannten Lagerschalen mit Freilegung dar, bei denen der Freilegungsbereich in Form einer abrupten Kante in den angrenzenden Traganteil der Gleitfläche übergeht.

Besonders bevorzugt beträgt die Länge der Rillen in Umfangsrichtung von 1 % bis 15 %, bevorzugt von 4 % bis 12 % der Umfangslänge der Gleitlagerschale.

Besonders bevorzugt sind die in axialer Richtung jeweils außenliegenden Rillen so angeordnet, dass deren Scheitelpunkt mit der Kante am axialen Ende der Gleitfläche zusammenfällt.

Eine weitere vorteilhafte Ausgestaltung der Erfindung sieht vor, dass jeweils benachbarte Rillen sich am umfänglichen Ende der Gleitlagerschale berühren.

Mit anderen Worten lässt sich dieses Merkmal so beschreiben, dass zwischen jeweils zwei benachbarten Rillen ein erhabener Steg verbleibt, dessen Oberfläche einen Teil der Gleitfläche bildet, wobei diese Oberfläche sich noch bis zum umfänglichen Ende (nachfolgend auch als Teilfläche bezeichnet) hin fortsetzt und somit den Traganteil der Gleitfläche erhöht. Allerdings nimmt der Traganteil der Oberfläche zwischen den Stegen am äußersten umfänglichen Ende, wo sich die Rillen, oder genauer gesagt, die Ränder der Rillen in der zylindrischen Ebene der Gleitfläche berühren, auf nahezu Null ab. In der Praxis kann aufgrund von Fertigungstoleranzen am äußersten umfänglichen Ende ein Steg mit einer kleinen aber dennoch messbaren Breite übrig bleiben. Dies soll von der Formulierung sich berührender Rillen jedoch mit umfasst sein.

Weitere Aufgaben, Merkmale und Vorteile der Erfindung werden nachfolgend anhand der Figuren näher erläutert. Es zeigen:
- Figur 1: ein Ausführungsbeispiel der erfindungsgemäßen Gleitlagerschale in perspektivischer Darstellung;
- Figur 2: den Endabschnitt der Gleitlagerschale gemäß Figur 1 in vergrößerter Darstellung und
- Figur 3: eine Aufsicht auf die Teilfläche einer erfindungsgemäßen Gleitlagerschale.

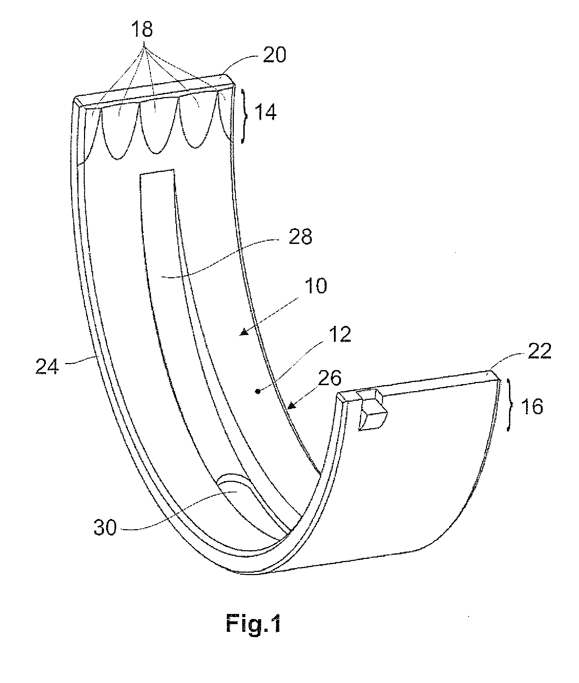

Die halbringförmige Gleitlagerschale gemäß Figur 1 weist eine radiale Innenseite 10 auf, auf der eine Gleitfläche 12 ausgebildet ist. Auf dieser Gleitfläche bildet sich im Betrieb ein Ölfilm aus, auf dem der Gegenläufer getragen wird. Die Gleitlagerschale weist ferner zwei umfängliche Endabschnitte 14 und 16 auf. In den Bereichen der Endabschnitte 14 und 16 sind jeweils auf der Innenseite 10 in Umfangsrichtung verlaufende und in axialer Richtung getrennte Rillen 18 ausgebildet, hier nur im einen Endabschnitt zu erkennen. An ihren beiden umfänglichen Enden weist die Gleitlagerschale stirnseitig jeweils eine Teilfläche 20, 22 auf. Die Gleitlagerschale wird in axialer Richtung beidseits durch jeweils eine axiale Stirnfläche oder Kante 24 bzw. 26 begrenzt.

Zwei der in Figur 1 dargestellten, erfindungsgemäßen halbringförmigen Gleitlagerschalen werden zu einem Radialgleitlager zusammengesetzt, indem sie mit ihren Teilflächen aufeinander aufliegt und in ihrem Lagersitz gegeneinander angedrückt werden.

Die in Figur 1 gezeigte, erfindungsgemäße Gleitlagerschale ist ferner mit einer mittig angeordneten und in Umfangsrichtung verlaufenden Ölnut 28 versehen. Die Ölnut 28 dient zum Verteilen von Öl, welches durch eine zentrische Ölbohrung 30 zugeführt wird. Das Öl wird zunächst innerhalb der Ölnut 28 in Umfangsrichtung und von dort aus durch Mitnahme- oder Schleppeffekte auf der Gleitfläche 10 verteilt. Die Ölnut 28 läuft vor den umfänglichen Endabschnitten aus, damit kein Öl unmittelbar über die Ölnut 28 in die Rillen 18 gefördert wird, um einen unnötigen Ölverlust zu vermeiden.

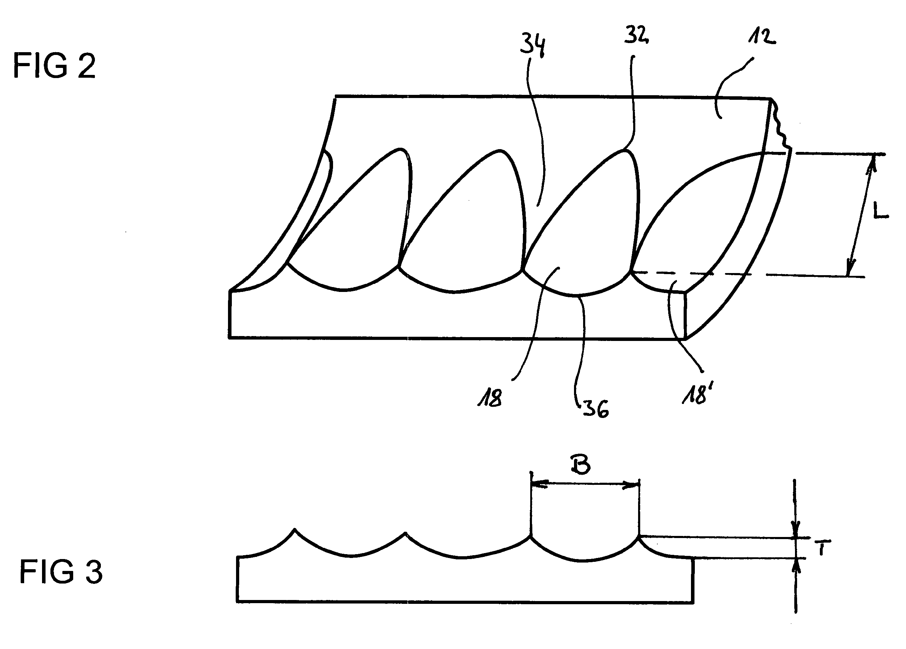

Wie in den Figuren 2 und 3 deutlicher zu erkennen ist, nimmt die Breite und die Tiefe der Rillen 18 in Umfangsrichtung, beginnend an der Teilfläche 20, 22 in Richtung auf die Lagerschalenmitte hin ab, bis sie in einem umfänglichen Scheitelpunkt 32 auslaufen. Die Länge L der Rillen 18 von der Teilfläche 20 bzw. 22 bis zu deren umfänglichen Scheitelpunkt 32 beträgt vorzugsweise von 1 % bis 15 %, bevorzugt von 4 % bis 12 % der Umfangslänge der gesamten Gleitlagerschale.

Zwischen jeweils zwei benachbarten Rillen 18 verbleibt ein erhabener Steg 34, dessen Oberfläche einen Teil der Gleitfläche 12 bildet, der auch noch bis zu der Teilfläche 20, 22 hin fortgesetzt ist. Insgesamt ist bei dieser Gestaltung der umfänglichen Endabschnitte der Traganteil der Gleitfläche 12 erhöht. In den Figuren 2 und 3 ist aber auch zu erkennen, dass der Tragflächenanteil am äußersten umfänglichen Ende der Gleitfläche bis auf nahezu Null abnimmt, die Rillen also gerade eben noch getrennt sind und sich nur die Ränder der Rillen in der Ebene der Gleitfläche berühren. Hierdurch würde eine Berührung zwischen der Gleitfläche und dem Gegenläufer im Teilflächenbereich der Gleitlagerschale zu einem beabsichtigten sofortigen Verschleiß der Stege 36 führen, bis der Grund für die Berührung, beispielsweise ein etwaiger Versatz der beiden montierten Gleitlagerschalen, kompensiert ist. Somit wird der Notwendigkeit einer Freilegung Rechnung getragen. Gleichzeitig minimieren die Stege 34 einen axialen Ölabfluss.

Die Breite B der Rillen 18 am umfänglichen Ende 20, 22 der Gleitlagerschale beträgt von 5 % bis 50 %, bevorzugt von 10 % bis 25 % der Gleitlagerschalenbreite. Ihre maximale Tiefe von der Gleitfläche 12 bis zum radialen Scheitelpunkt 36 beträgt am umfänglichen Ende 20, 22 von 0,5 % bis 5 %, bevorzugt 0,5 % bis 2 % der Lagerschalendicke.

Ein Vorteil dieser Ausgestaltung der gerillten Bereiche ist, dass in Umfangsrichtung von der Teilfläche in Richtung des Scheitelpunkts der Lagerschale der Öldruck aufgrund des kontinuierlich abnehmenden Rillenquerschnitts progressiv zunimmt, was der Ausbildung eines gleichmäßigen Ölfilms auf der Gleitfläche zugute kommt.

Das in den Figuren 1 bis 3 gezeigte Ausführungsbeispiel weist insgesamt drei vollständige Rillen 18 in axialer Richtung in der Lagerschalenmitte und beidseits jeweils eine halbe Rille 18' in axialer Richtung außenliegend auf. Anstelle der gezeigten drei genügt prinzipiell auch eine mittig angeordnete Rille. Es können jedoch auch zwei, vier oder mehr Rillen vorgesehen sein.

Die axial außenliegend angeordneten Rillen oder Teilrillen 18' schneiden die jeweils zugeordnete axiale Kante 24 bzw. 26 an. Hierdurch ist eine Berührung der Gleitfläche nahe der Teilfläche mit dem Gegenläufer ausgeschlossen. Es kann nicht zu der bekannten Kantenträgerproblematik aufgrund beispielsweise des Einschnürens eines Pleuelauges, oder einer sonstigen Verformung des die Lagerschale aufnehmenden Teils oder einer Schiefstellung der Welle kommen. Dieser Vorteil ist insbesondere dann gewährleistet, wenn wie in den gezeigten Ausführungsbeispielen der radiale Scheitelpunkt 36' der in axialer Richtung jeweils außenliegenden Rille mit der zugeordneten axialen Kante der Gleitfläche zusammenfällt.

### Bezugszeichenliste

- 10: Innenseite
- 12: Gleitfläche
- 14, 16: umfänglicher Endabschnitt
- 18: Rille
- 18': Teilrille

- 20, 22: Teilfläche
- 24, 26: axiale Kante/Stirnfläche
- 28: Ölnut

- 30: Ölbohrung
- 32: umfänglicher Scheitelpunkt
- 34: Steg
- 36: radialer Scheitelpunkt
- 36': radialer Scheitelpunkt der Teilrille

- B: Breite der Rille
- L: Länge der Rille in Umfangsrichtung
- T: Tiefe der Rille

## Patentansprüche

1. Halbringförmige Gleitlagerschale mit zwei umfänglichen Endabschnitten (14, 16), einer radialen Innenseite (10), entlang der eine Gleitfläche (12) angeordnet ist, und mit auf der Innenseite (10) im Bereich wenigstens eines der Endabschnitte (14, 16) ausgebildeten, in Umfangsrichtung verlaufenden und in axialer Richtung getrennten Rillen (18), wobei die Rillen (18) am umfänglichen Ende (20, 22) der Gleitlagerschale beginnend in Umfangsrichtung einwärts mit abnehmender Breite B und mit abnehmender Tiefe T auslaufen, **dadurch gekennzeichnet, dass** jeweils eine Rille (18) in axialer Richtung auf beiden Seiten außenliegend angeordnet ist, die die zugeordneten axialen Kanten (24, 26) der Gleitfläche anschneidet.

2. Gleitlagerschale nach Anspruch 1, **dadurch gekennzeichnet,**
**dass** die maximale Tiefe T der Rillen (18) am umfänglichen Ende (20, 22) der Gleitlagerschale von 0,5 % bis 5 %, vorzugsweise 0,5 % bis 2 % der Lagerschalendicke beträgt.

3. Gleitlagerschale nach einem der Ansprüche 1 oder 2, **dadurch gekennzeichnet,**
**dass** die maximale Breite B der Rillen (18) am umfänglichen Ende (20, 22) der Gleitlagerschale von 5 % bis 50 %, vorzugsweise von 10 % bis 25 % der Lagerschalenbreite beträgt.

4. Gleitlagerschale nach einem der Ansprüche 1 bis 3, **dadurch gekennzeichnet,**
**dass** die Länge L der Rillen (18) in Umfangsrichtung von 1 % bis 15 %, vorzugsweise von 4 % bis 12 % der Umfangslänge der Gleitlagerschale beträgt.

5. Gleitlagerschale nach einem der Ansprüche 1 bis 4, **dadurch gekennzeichnet,**
**dass** der Scheitelpunkt der in axialer Richtung jeweils außen liegenden Rillen (18) mit der zugeordneten axialen Kante (24, 26) der Gleitfläche zusammenfällt.

6. Gleitlagerschale nach einem der Ansprüche 1 bis 5, **dadurch gekennzeichnet,**
**dass** jeweils benachbarte Rillen (18) sich am umfänglichen Ende (20, 22) der Gleitlagerschale berühren.

## Claims

1. Semi-annular sliding bearing shell comprising two circumferential end sections (14, 16), a radial inner face (10) along which a sliding surface (12) lies, and comprising grooves (18) which are formed on the inner face (10) in the region of at least one of the end sections (14, 16), which run in the circumferential direction, and which are separated in the axial direction, wherein the grooves (18) run inwards on the circumferential end (20, 22) of the sliding bearing shell beginning in the circumferential direction with a decreasing width B and with a decreasing depth T, **characterized in that**
a groove (18) lies on the exterior of each side in the axial direction, said groove intersecting the corresponding axial edges (24, 26) of the sliding surface.

2. Sliding bearing shell according to claim 1, **characterized in that** the maximum depth T of the grooves (18) on the circumferential end (20, 22) of the sliding bearing shell is from 0.5% to 5%, preferably 0.5% to 2% of the thickness of the bearing shell.

3. Sliding bearing shell according to one of claims 1 and 2, **characterized in that** the maximum width B of the grooves (18) on the circumferential end (20, 22) of the sliding bearing shell is from 5% to 50%, preferably from 10% to 25% of the width of the bearing shell.

4. Sliding bearing shell according to one of claims 1 to 3, **characterized in that** the length L of the grooves (18) in the circumferential direction is from 1% to 15%, preferably from 4% to 12% of the circumferential length of the sliding bearing shell.

5. Sliding bearing shell according to one of claims 1 to 4, **characterized in that** the apex of the grooves (18) in each case lying on the exterior in the axial direction coincides with the corresponding axial edge (24, 26) of the sliding surface.

6. Sliding bearing shell according to one of claims 1 to 5, **characterized in that** grooves (18) adjacent to one another touch one another on the circumferential end (20, 22) of the sliding bearing shell.

## Revendications

1. Coquille de coussinet lisse de forme semi-annulaire, avec deux parties terminales périphériques (14, 16), avec un côté intérieur radial (10) le long duquel est disposée une surface de glissement (12), et avec des gorges (18) formées sur le côté intérieur (10) dans la région d'au moins une des parties terminales (14, 16), s'étendant en direction périphérique et séparées en direction axiale, sachant que les gorges (18), en partant de l'extrémité périphérique (20, 22) de la coquille de coussinet lisse, s'étendent vers l'intérieur en direction périphérique avec une largeur décroissante B et avec une profondeur décroissante T,
**caractérisée en ce qu'**une gorge (18) est disposée en position extérieure sur chacun des deux côtés en direction axiale, et elle entame le bord axial associé (24, 26) de la surface de glissement.

2. Coquille de coussinet lisse selon la revendication 1, **caractérisée en ce que** la profondeur maximale T des gorges (18) à l'extrémité périphérique (20, 22) de la coquille de coussinet lisse est comprise entre 0,5 % et 5 %, de préférence entre 0,5 % et 2 %, de l'épaisseur de la coquille de coussinet.

3. Coquille de coussinet lisse selon la revendication 1 ou 2, **caractérisée en ce que** la largeur maximale B des gorges (18) à l'extrémité périphérique (20, 22) de la coquille de coussinet lisse est comprise entre 5 % et 50 %, de préférence entre 10 % et 25 %, de la largeur de la coquille de coussinet.

4. Coquille de coussinet lisse selon l'une des revendications 1 à 3, **caractérisée en ce que** la longueur L des gorges (18) en direction périphérique est comprise entre 1 % et 15 %, de préférence entre 4 % et 12 %, de la longueur périphérique de la coquille de coussinet lisse.

5. Coquille de coussinet lisse selon l'une des revendications 1 à 4, **caractérisée en ce que** le sommet des gorges (18) respectivement situées à l'extérieur en direction axiale coïncide avec le bord axial associé (24, 26) de la surface de glissement.

6. Coquille de coussinet lisse selon l'une des revendications 1 à 5, **caractérisée en ce que** des gorges (18) respectivement voisines se touchent à l'extrémité périphérique (20, 22) de la coquille de coussinet lisse.
